# EUROPEAN PATENT SPECIFICATION

(11) **EP 2 540 908 B1**
(45) Date of publication and mention of the grant of the patent: **26.04.2017**
(21) Application number: 11747550.9
(22) Date of filing: 22.02.2011
(51) Int. Cl.: D06M 15/564, C08G 18/06, C08G 18/79, C08G 18/42, C08G 18/12, C08G 18/10, C09D 175/06, D06M 11/79, C08G 18/76

(54) **MOISTURE-PERMEABLE WATER-PROOF FABRIC**
FEUCHTIGKEITSDURCHLÄSSIGES WASSERDICHTES GEWEBE
TISSU ÉTANCHE À L'EAU PERMÉABLE À L'HUMIDITÉ

(30) Priority: 23.02.2010 JP 2010036875
(43) Date of publication of application: 02.01.2013
(73) Proprietor: SEIREN CO., LTD., Fukui-shi Fukui 918-8560 (JP)
(72) Inventor: YAMADA Yoshiyuki, Fukui-shi, Fukui 918-8560 (JP); SAKAMOTO Katsumi, Fukui-shi Fukui 918-8560 (JP); KATO Yoshiharu, Fukui-shi Fukui 918-8560 (JP)
(74) Representative: V.O.
(86) International application number: PCT/JP2011/054427
(87) International publication number: WO 2011/105595

(56) References cited:
- WO-A1-2007/086128
- GB-A- 718 218
- JP-A- 2008 291 386
- JP-A- 2009 149 876
- JP-A- 2009 161 898
- US-A1- 2008 021 032

## Description

### Technical Field

The present invention relates to a moisture-permeable waterproof fabric, particularly a moisture-permeable waterproof fabric which includes a polyurethane resin that comprises a plant-based component and has equivalent or superior performance as compared to conventional petroleum-based polyurethane resins.

### Background Art

Conventionally, as a material used in a moisture-permeable waterproof fabric, polyurethane resins are widely employed for their excellent mechanical characteristics, and porous films of polyurethane resins prepared by a wet coagulation system and non-porous films of polyurethane resins having a hydrophilic group are utilized.

Further, in recent years, from the standpoint of reducing environmental load, moisture-permeable waterproof fabrics in which a resin comprising a plant-based component is used have been developed. Polylactic resins are widely known as such a resin. For example, unexamined Japanese Patent Application Kokai Publication No. 2002-20530 discloses a wet-type porous film structure in which a polylactic resin is used as a plant-based component.

However, the water pressure resistance (JIS L 1092 A method) of the wet-type porous film structure disclosed in the above-described Patent Literature is about 1,600 mmH₂O and the water resistance is thus not sufficient from the standpoint of practical waterproofing.

In addition, polylactic resins generally lack toughness so that they become fragile and lack flexibility, especially when they are made into a porous film. Thus, it is difficult to use a polylactic resin in apparel applications.

Further, it is known to utilize a polyol such as a castor oil or a modified castor oil, which is a plant-based component, as a starting material of a polyurethane resin. For example, unexamined Japanese Patent Application Kokai Publication No. 2009-149876 discloses a moisture-permeable polyurethane resin comprising a plant-based polymeric diol component produced from castor oil. Here, by using this plant-based polymeric diol component in combination with a polymeric diol component containing an oxyethylene group which is a hydrophilic group, the resulting polyurethane resin is imparted with hydrophilicity in order to improve the moisture permeability. However, the hydrophilic polyurethane resin is not porous, so that there is a problem in that it is difficult to attain sufficient moisture permeability (JIS L-1099 A-1 method).

Further, castor oil is a composition mainly composed of fatty acid triglyceride and the principal component of the constituent fatty acid is ricinoleic acid; therefore, castor oil has about 2.7 hydroxyl groups per molecule. Yet, when a polyol having more than 2 hydroxyl groups per molecule is used, since a branched structure or a cross-linked structure is formed, the resulting polyurethane resin becomes overly hardened, so that a resin film satisfying appropriate flexibility (texture) in practical terms cannot be obtained. Moreover, when the viscosity becomes excessively high due to an increase in the formation of branched structure or cross-linked structure, there arises a problem that, in the formation of a resin film, a resin or a resin solution suitable for coating cannot be obtained.

Further, as other plant-based polyol used as a starting material of a polyurethane resin, dicarboxylic acid-based diols such as sebacic acid are known. As a polyurethane resin produced by using a dicarboxylic acid-based diol, for example, unexamined Japanese Patent Application Kokai Publication No. H03-88833 discloses a moisture-permeable porous sheet material prepared by a wet coagulation system and JP 4329046B discloses a moisture curable-type hot melt film. However, the former does not have a sufficient level of moisture permeability and waterproof property in practical terms; therefore, it has the problem of being not suitable as an outdoor sporting wear material where high moisture permeability and water-resistance are required. Further, the latter is not suitable for mass production because of the complicated production process thereof and also has the problem in that, since the polyurethane resin has hydrophilic groups, the film has high water-swellability which potentially causes a marked decrease in the strength upon contact with water. Moreover, the expression of moisture permeability, waterproof property, mechanical strength in a polyurethane resin by these techniques is largely dependent on the components and additives constituting the polyurethane resin other than sebacic acid; therefore, there is a limitation in terms of designable structure.

That is, with respect to moisture-permeable waterproof fabrics utilizing a porous film, those having a porous resin film composed of a petroleum-based component are still the mainstream and, at present, no practical moisture-permeable waterproof fabric having a porous film composed of a plant-based component is available on the market.

GB 718 218 A discloses polyurethane-coated textile fabrics having low moisture-uptake which are produced by application of a solution of polyurethane onto a textile fabric, such as polyethylene terephthalate fabric, and subjecting the fabric to a subsequent heat treatment. The polyurethane is obtained by reacting a polyester polyol (having a hydroxyl content of 4 to 6% from sebacic acid, ethylene glycol and glycerol) with dicyclohexylmethane diisocyanate.

### Disclosure of the Invention

### Objective of the Invention

An object of the present invention is to solve the above-described problems, in particular, to provide a moisture-permeable waterproof fabric which comprises a plant-based component contributing to a reduction in environmental load and exhibits equivalent or superior performance as compared to a case where a conventional petroleum-based polyurethane resin is used.

### Summary of the Invention

The present inventors intensively studied to discover that the above-described problems can be solved by using, as a starting material of a polyurethane resin, a sebacic acid-based polyol-component which is produced from sebacic acid obtained from castor oil as a plant-based component, thereby completing the present invention.

That is, the present invention relates to a moisture-permeable waterproof fabric which comprises, on at least one surface thereof, a porous resin film having a thickness of 5 to 100 µm, which porous resin film is composed of a dried polyurethane resin comprising at least a polyol component, an isocyanate component and a chain extender component, which polyurethane resin contains 5 to 80% by weight of a sebacic acid-based polyol component that has a number average molecular weight of 500 to 5,000 produced from a plant-based sebacic acid and a diol, wherein the polyurethane resin has a number average molecular weight of 50,000 to 500,000, and the molar ratio of said polyol component and said isocyanate component, polyol/isocyanate, is between 1/6 and 1/2, and wherein the moisture permeability measured by the JIS L1099 A-1 method and the moisture permeability measured by the JIS L1099 B-1 method are both not less than 5,000 g/m²·24h and the water pressure resistance measured by the JIS L-1092 B method (high water pressure method) is not lower than 5,000 mmH₂O.

### Efficacy of the Invention

According to the present invention, by mainly using a plant-based sebacic acid-based polyol component as a polyol component of a polyurethane resin, the toughness, which is a problem of using a plant-based resin such as polylactic acid resin, can be improved and a toughness equivalent to that of a polyurethane resin comprising a petroleum-based component can be attained. Further, moisture permeability and waterproof performance equivalent or superior to a moisture-permeable waterproof fabric produced from a polyurethane resin comprising a petroleum-based component can be provided. Moreover, because of the use of a plant-based component, the moisture-permeable waterproof fabric of the present invention can contribute to a reduction in environmental load.

### Mode for Carrying Out the Invention

The moisture-permeable waterproof fabric according to the present invention is characterized in that it comprises, on at least one surface thereof, a porous resin film as described above which is composed of a polyurethane resin comprising at least a polyol component, an isocyanate component and a chain extender component, and has a number average molecular weight of 50,000 to 500,000. The polyurethane resin contains 5 to 80% by weight of a sebacic acid-based polyol component produced from a plant-based sebacic acid and a diol. The molar ratio of the polyol component and the isocyanate component of the polyurethane resin is between 1/6 and 1/2. The moisture permeability of the moisture-permeable waterproof fabric of the present invention measured by the JIS L1099 A-1 method and the moisture permeability measured by the JIS L1099 B-1 method are both not less than 5,000 g/m²·24h and the water pressure resistance measured by the JIS L-1092 B method (high water pressure method) is not lower than 5,000 mmH₂O.

The sebacic acid used in the moisture-permeable waterproof fabric of the present invention is, for example, a C₁₀ linear saturated dibasic acid obtained by a cleavage reaction of a vegetable oil, such as castor oil, by a caustic alkali. Generally, commercially available castor oil-based polyols are produced from ricinoleic acid obtained by saponification decomposition of castor oil and are, therefore, different from those polyols produced from sebacic acid. Here, the material oil of the plant-based sebacic acid is not particularly restricted to castor oil.

Castor oil is a compound mainly having the structure represented by the following formula 1.

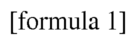

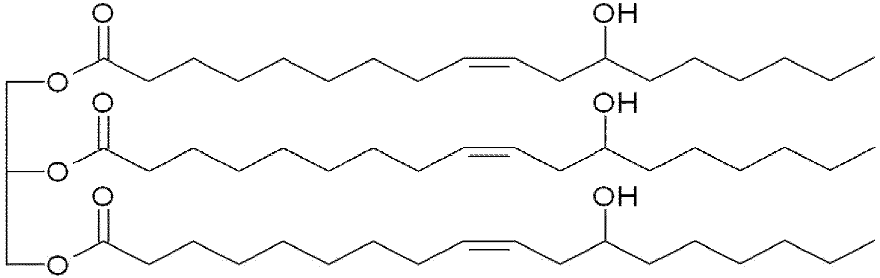

Further, sebacic acid is a dicarboxylic acid having the structure represented by the following formula 2.

[formula 2] **HOOC (CH₂)₈ COOH**

Sebacic acid-based polyols are, as an alternative to polyester polyols, used as a starting material of urethane used as an adhesive or a paint; however, in the development of the present invention, it was discovered that a polyurethane resin produced by using sebacic acid as a starting material has a high permeability and waterproof property, as well as excellent toughness, and such polyurethane resin was used as a principal material of a resin film of a moisture-permeable waterproof fabric.

The sebacic acid-based polyol used in the moisture-permeable waterproof fabric of the present invention is a sebacic acid-based polyester diol obtained by a reaction of a plant-based sebacic acid and a diol. Further, the upper limit of the number of carbon atoms in the diol is not particularly restricted; however, the number average molecular weight of the resulting sebacic acid-based polyol is in the range of 500 to 5,000, more preferably 1,000 to 3,000. When the number average molecular weight is smaller than 500, the resulting polyurethane resin tends to be too hard, while when it is greater than 5,000, the resulting polyurethane resin tends to be too soft.

Examples of the diol to be reacted with sebacic acid include diols such as ethylene glycol, propanediol, hexanediol, nonanediol, neopentyl glycol and polyethylene glycol (PEG). These diols may be used individually, or two or more thereof may be used in combination as required.

Thereamong, from the standpoint of environmental load, it is preferred that a plant-based component be used also in the diol per se to be reacted with sebacic acid. In cases where the sebacic acid-based polyol is produced from a plant-based sebacic acid and a plant-based diol, the plant-based percentage of the polyol component is 100%. In this manner, when the plant-based percentage is calculated with consideration of the constituents of the sebacic acid-based polyol, the amount of the plant-based component(s) contained in the polyurethane resin is 5 to 80% by weight, preferably 6 to 75% by weight. When the amount of the plant-based component(s) is less than 5% by weight, the environmental load-reducing effect tends to be small, while when the amount is greater than 80% by weight, a polyurethane resin having sufficiently satisfactory moisture permeability, waterproof property, and mechanical strength may not be obtained and it may become difficult to obtain a porous resin film.

In the polyurethane resin used in the present invention, the content of the sebacic acid-based polyol component obtained from a plant-based sebacic acid in a polyurethane-forming material is 5 to 80% by weight, preferably 6 to 75% by weight. The percentage of the above-described polyol component is preferably greater from the standpoint of environmental load; however, when it is greater than 80% by weight, it may become difficult to form a film or obtain a porous resin film so that a polyurethane resin having sufficiently satisfactory moisture permeability, waterproof property, and mechanical strength may not be obtained. Further, when the amount of the above-described polyol component is less than 5% by weight, the plant-based percentage of the resulting polyurethane resin is reduced; therefore, such an amount is not preferred from the standpoint of reducing environmental load.

Further, as a polyol composed of an aliphatic dicarboxylic acid, which is normally used in the production of polyurethane, a polyol composed of a C₄ to C₁₂ dicarboxylic acid is commonly employed; however, since sebacic acid contains a greater number of carbon atoms as compared to adipic acid commonly used as a starting material of a polyurethane resin, a polyurethane resin produced from a sebacic acid-based polyol can be expected to have an improved waterproof property. Thereamong, a polyurethane resin produced from the above-described polyol can be expected to have a good balance of hydrophobicity and mechanical strength, as well as an improved moisture permeability because of the porous film-forming property. When the amount of the above-described polyol component is less than 5% by weight, these effects may not be sufficiently attained; therefore, such an amount is not preferred.

It is noted here that the "composition percentage of the sebacic acid-based polyol component" used herein relates to the percentage of all sebacic acid-based polyols produced from a plant-based sebacic acid, irrespective of the type thereof.

As the polyol component of polyurethane resin used in the moisture-permeable waterproof fabric of the present invention, one produced from a dicarboxylic acid other than sebacic acid may also be used in combination. Examples of the dicarboxylic acid other than sebacic acid include dicarboxylic acids such as adipic acid, succinic acid, terephthalic acid and isophthalic acid that are derived from petroleum. The amount of these carboxylic acids to be used is preferably small in order not to reduce the plant-based percentage; however, it is set as appropriate with consideration of the above-described composition percentage and the later-described molar ratio of the polyol component and the isocyanate component.

Further, as required, in addition to the above-described plant-based polyol, other dihydric polyol may also be used in combination. Specific examples thereof include petroleum-based dihydric polyols such as polyester polyols, polyether polyols, polycarbonate polyols, polyamide-based polyols, silicone-based polyols and fluorine-based polyols. In order not to reduce the plant-based percentage, these dihydric polyols are preferably added in the smallest amount possible.

The above-described polyurethane resin is composed of a polyol component, an isocyanate component and a chain extender component, wherein the molar ratio of the polyol component and the isocyanate component, polyol/isocyanate, is between 1/6 and 1/2, preferably between 1/5.5 and 1/2.5. When the amount of the isocyanate component is excessive, it tends to be difficult to control the reaction, while when the amount of the polyol component is excessive, it tends to be difficult to obtain a porous resin film.

Here, the NCO/OH equivalent ratio of the isocyanate component, polyol component and chain extender component is usually 0.95 to 1.15, preferably substantially 1. When the NCO/OH equivalent ratio is not in this range, a polyurethane resin having a high molecular weight cannot be obtained so that it tends to be difficult to produce a moisture-permeable waterproof fabric having useful performance.

The number average molecular weight of the polyurethane resin used in the moisture-permeable waterproof fabric of the present invention is between 50,000 and 500,000. When the number average molecular weight of the above-described polyurethane resin is not in the above-described range, a resin or resin solution suitable for coating in the formation of a resin film cannot be obtained and it tends to be difficult to obtain a resin film which exhibits practical moisture permeability and water-resistance.

As a method for obtaining a polyurethane resin, a conventional prepolymer method can be employed. Specifically, a method in which a prepolymer is prepared by allowing the above-described polyol and isocyanate to react in a solvent inert to isocyanate group, for example, a polar organic solvent such as dimethylformamide (DMF) or dimethyl sulfoxide (DMSO) or a non-polar organic solvent such as methyl ethyl ketone (MEK), toluene or xylene, and then the thus obtained prepolymer is allowed to react with a chain extender, such as a diol, to increase the degree of polymerization can be employed. It is noted here, however, that the production method of the polyurethane resin used in the moisture-permeable waterproof fabric of the present invention is not restricted to this method.

The isocyanate component used is not particularly restricted; however, examples thereof include diisocyanates represented by aromatic diisocyanates such as xylene diisocyanate, 4,4'-diphenylmethane diisocyanate (MDI) and 2,4- and/or 2,6-tolylene diisocyanate; aliphatic diisocyanates such as hexamethylene diisocyanate and lysine diisocyanate; and alicyclic diisocyanates such as tetramethylene diisocyanate, isophorone diisocyanate and hydrogenated MDI. These isocyanates may be used individually, or two or more thereof may be used in combination as required.

Further, the chain extender component is not particularly restricted; however, generally, a diol having a relatively low molecular weight is employed. Examples of such diol include ethylene glycol, diethylene glycol, propanediol, butanediol, hexanediol and polyethylene glycol (PEG) that are derived from petroleum; and 1,3-propanediol and 1,2-hexanediol that are derived from a plant. These diols may be used individually, or two or more thereof may be used in combination as required. In addition, a diamine and/or the like may also be used as required. The chain extender is generally used primarily for controlling the molecular weight and physical properties of the resulting film in the synthesis of a resin used as a moisture-permeable waterproof film.

The above-described polyurethane resin may be used by diluting it with an organic solvent as required. Further, to the above-described polyurethane resin, an antioxidant, a stabilizer such as a light resistance-improving agent, an inorganic filler, a non-solvent, a lubricant, a water repellant, a pigment, other additive(s) and/or a function-imparting agent may also be added as appropriate.

The moisture-permeable waterproof fabric according to the present invention comprises the above-described polyurethane resin on at least one surface thereof and within the moisture-permeable waterproof fabric, the moisture permeability measured by the JIS L1099 A-1 method and the moisture permeability measured by the JIS L1099 B-1 method are both not less than 5,000 g/m²·24h and the water pressure resistance measured by the JIS L1092 B method (high water pressure method) is not lower than 5,000 mmH₂O. The moisture permeability is preferably not less than 6,000 g/m²·24h and the water pressure resistance is more preferably not lower than 6,000 mmH₂O. When the A-1 moisture permeability and the B-1 moisture permeability are less than 5,000 g/m²·24h, comfortable moisture permeating feel cannot be attained when the fabric is actually used, causing a stuffy feel. In cases where the water pressure resistance is lower than 5,000 mmH₂O, practical waterproof property cannot be attained.

The above-described polyurethane resin is applied such that the thickness of the resulting resin film after drying becomes 5 to 100 µm, preferably 10 to 80 µm. When the resin film thickness is less than 5 µm, practical waterproof property tends not to be attained, while when the resin film is thicker than 100 µm, practical moisture permeability tends not to be attained.

The moisture-permeable waterproof fabric according to the present invention has excellent toughness; therefore, it is suitable as a fabric material, particularly as a material for sporting wear and outdoor fabrics.

Further, the resin film formed on the moisture-permeable waterproof fabric of the present invention is a porous film. When resin film is non-porous, a resin film exhibiting sufficient moisture permeability cannot be obtained.

The fabric used in the moisture-permeable waterproof fabric of the present invention is not particularly restricted; however, examples thereof include fabrics made of polyamide fiber, and polyester fiber. Further, the mode of the fabric is also not particularly restricted and, for example, a woven fabric or a knitted fabric may be employed as appropriate.

The moisture-permeable waterproof fabric according to the present invention can be produced by a method in which a polyurethane resin solution containing the above-described polyurethane resin as a major component is coated on at least one side of a fabric by a coating method. Examples of the method include those in which a fabric is directly coated using a knife coater, comma coater, roll coater, die coater, or lip coater.

Further, the moisture-permeable waterproof fabric according to the present invention can also be produced by a lamination method in which separately formed resin films are laminated on a fabric. Examples of such lamination methods include a method in which, after coating the above-described polyurethane resin solution on a mold-releasing substrate, resin films obtained by immersion and coagulation in water are laminated on one side of a fabric via an adhesive.

The above-described mold-releasing substrate is not particularly restricted and examples thereof include films made of a resin itself having releasing property for polyurethane resin (such as an olefin resin or silicon resin: hereinafter, referred to as "mold-releasing agent"); mold-releasing papers in which a mold-releasing layer composed of a mold-releasing agent is laminated on a substrate such as a paper, fabric or film; mold-releasing fabrics; and mold-releasing films. Preferred thereamong from the standpoint of the mold-releasing property are olefin resin films and mold-releasing films in which a mold-releasing layer composed of an olefin resin is laminated on a polyester resin film. The mold-releasing substrate may have an irregular configuration as well and, by using such a mold-releasing substrate, a resin film having an irregularly configured surface can be formed so that not only blocking between film surfaces can be prevented, but also a moisture-permeable waterproof fabric with a pleasant texture can be obtained.

The conditions of coating film formation may be, for example, those of a wet coagulation system; however, they are not particularly restricted. Specific examples of the conditions include those of a method in which a polyurethane resin solution prepared by dissolving the above-described polyurethane resin in a water-soluble polar solvent such as DMF is coated on a fabric and coagulated in water or an aqueous solution containing a polar solvent to form a porous film.

### Examples

The present invention will now be described more concretely by way of examples thereof; however, the present invention is not restricted to the following examples. In the following examples, unless otherwise specified, "%" and "part" are by weight.

The resulting polyurethane resins and moisture-permeable waterproof fabrics were subjected to the following performance evaluations.

### [Tensile strength test]

Preparation of test sample: A resin solution adjusted to have a polyurethane resin concentration of 15% was applied to a mold-releasing paper to a thickness of 150 µm and the resultant was dried for 3 minutes using an air-circulating dryer at 120°C and then allowed to cool. The resulting coating film was removed from the mold-releasing paper to obtain a coating film of 20 µm in thickness.

Tensile strength measurement method: In accordance with JIS L 1096, a test piece of 25 mm in width was stretched at a grip distance of 50 mm and a tensile rate of 150 mm/min to measure the stress value, breaking strength and elongation at break when the test piece was stretched at 100%. For the measurement, an autograph AG-IS manufactured by Shimadzu Corporation was employed.

### [Moisture permeability test]

In accordance with the JIS L-1099 A-1 and B-1 methods, the moisture permeability of moisture-permeable waterproof fabric was measured.

### [Water pressure resistance test]

In accordance with the JIS L-1092 B method (high water pressure method), the water pressure resistance of moisture-permeable waterproof fabric was measured.

### Example 1

Under a dry nitrogen atmosphere, 50 g of a plant-based sebacic acid-based polyol 1 (HS2P-103S manufactured by HOKOKU Co., Ltd.; number average molecular weight: 1,000, components: sebacic acid/propanediol, plant-based percentage: 100%) was dissolved in 393 g of DMF. To the thus obtained solution, 63 g of MDI (polyol/isocyanate molar ratio: 1/5) was added, and the resultant was allowed to react at 70°C for 2 hours to obtain a prepolymer. Then, 18 g of 1,4-butanediol was added and allowed to react at 60°C for 3 hours to obtain a polyurethane resin 25% solution 1 (number average molecular weight: 135,200) containing 38% of a sebacic acid-based polyol component (solid content percentage).

Thereafter, 100 parts of the thus obtained plant-based polyurethane resin 25% solution 1, 20 parts of DMF, 6 parts of a hydrophobic silica (NIPSIL SS-50 manufactured by Tosoh Silica Corporation) and 1 part of a curing agent (CORONATE HX manufactured by Nippon Polyurethane Industry Co., Ltd.) were mixed with stirring to obtain a polyurethane resin mixture.

Then, to nylon taffeta subjected to a water-repellent treatment in advance, the thus obtained polyurethane resin mixture was applied using a roll-on knife coater to a thickness after drying of 40 µm and coagulated in water for 2 minutes. Further, the resultant was washed by immersion in warm water at 50°C for 3 minutes and dried at 150°C for 1 minute to obtain a moisture-permeable waterproof fabric having a polyurethane resin film. The evaluation results are shown in Table 1.

### Example 2

Under a dry nitrogen atmosphere, 50 g of a plant-based sebacic acid-based polyol 2 (HS2P-203S manufactured by HOKOKU Co., Ltd.; number average molecular weight: 2,000, components: sebacic acid/propanediol, plant-based percentage: 100%) was dissolved in 270 g of DMF. To the thus obtained solution, 31 g of MDI (polyol/isocyanate equivalent ratio: 1/5) was added, and the resultant was allowed to react at 70°C for 2 hours to obtain a prepolymer. Then, 9.0 g of 1,4-butanediol was added and allowed to react at 60°C for 3 hours to obtain a polyurethane resin 25% solution 2 (number average molecular weight: 123,200) containing 56% of a sebacic acid-based polyol component (solid content percentage).

Thereafter, 100 parts of the thus obtained plant-based polyurethane resin 25% solution 2, 20 parts of DMF, 6 parts of a hydrophobic silica (NIPSIL SS-50 manufactured by Tosoh Silica Corporation) and 1 part of a curing agent (CORONATE HX manufactured by Nippon Polyurethane Industry Co., Ltd.) were mixed by stirring to obtain a polyurethane resin mixture.

Then, to nylon taffeta subjected to a water-repellent treatment in advance, the thus obtained polyurethane resin mixture was applied using a roll-on knife coater to a thickness after drying of 40 µm and coagulated in water for 2 minutes. Further, the resultant was washed by immersion in warm water at 50°C for 3 minutes and dried at 150°C for 1 minute to obtain a moisture-permeable waterproof fabric having a polyurethane resin film. The evaluation results are shown in Table 1.

### Example 3

Under a dry nitrogen atmosphere, 50 g of a plant-based sebacic acid-based polyol 3 (HS2H-200S manufactured by HOKOKU Co., Ltd.; number average molecular weight: 2,000, components: sebacic acid/hexanediol, plant-based percentage: 60%) was dissolved in 220 g of DMF. To the thus obtained solution, 19 g of MDI (polyol/isocyanate equivalent ratio: 1/3) was added, and the resultant was allowed to react at 70°C for 2 hours to obtain a prepolymer. Then, 4.5 g of 1,4-butanediol was added and allowed to react at 60°C for 3 hours to obtain a polyurethane resin 25% solution 3 (number average molecular weight: 139,600) containing 68% of a sebacic acid-based polyol component (solid content percentage).

Thereafter, 100 parts of the thus obtained plant-based polyurethane resin 25% solution 3, 20 parts of DMF, 6 parts of a hydrophobic silica (NIPSIL SS-50 manufactured by Tosoh Silica Corporation) and 1 part of a curing agent (CORONATE HX manufactured by Nippon Polyurethane Industry Co., Ltd.) were mixed with stirring to obtain a polyurethane resin mixture.

Then, to nylon taffeta subjected to a water-repellent treatment in advance, the thus obtained polyurethane resin mixture was applied using a roll-on knife coater to a thickness after drying of 40 µm and coagulated in water for 2 minutes. Further, the resultant was washed by immersion in warm water at 50°C for 3 minutes and dried at 150°C for 1 minute to obtain a moisture-permeable waterproof fabric having a polyurethane resin film. The evaluation results are shown in Table 1.

### Example 4

Under a dry nitrogen atmosphere, 20 g of a plant-based sebacic acid-based polyol 1 (HS2P-103S manufactured by HOKOKU Co., Ltd.; number average molecular weight: 1,000, components: sebacic acid/propanediol, plant-based percentage: 100%) and 60 g of an adipic acid-based polyol (P-2010 manufactured by KURARAY Co., Ltd.; number average molecular weight: 2,000) were dissolved in 482 g of DMF. To the thus obtained solution, 63 g of MDI (polyol/isocyanate equivalent ratio: 1/5) was added, and the resultant was allowed to react at 70°C for 2 hours to obtain a prepolymer. Then, 18 g of 1,4-butanediol was added and allowed to react at 60°C for 3 hours to obtain a polyurethane resin 25% solution 4 (number average molecular weight: 140,100) containing 12% of a sebacic acid-based polyol component (solid content percentage).

Thereafter, 100 parts of the thus obtained plant-based polyurethane resin 25% solution 4, 20 parts of DMF, 6 parts of NIPSIL SS-50 (manufactured by Tosoh Silica Corporation) and 1 part of CORONATE HX (manufactured by Nippon Polyurethane Industry Co., Ltd.) were mixed with stirring to obtain a polyurethane resin mixture.

Then, to nylon taffeta subjected to a water-repellent treatment in advance, the thus obtained polyurethane resin mixture was applied using a roll-on knife coater to a thickness after drying of 40 µm and coagulated in water for 2 minutes. Further, the resultant was washed by immersion in warm water at 50°C for 3 minutes and dried at 150°C for 1 minute to obtain a moisture-permeable waterproof fabric having a polyurethane resin film. The evaluation results are shown in Table 1.

### Comparative Example 1

Under a dry nitrogen atmosphere, 50 g of a plant-based sebacic acid-based polyol 3 (HS2H-200S manufactured by HOKOKU Co., Ltd.; number average molecular weight: 2,000, components: sebacic acid/hexanediol, plant-based percentage: 60%) was dissolved in 174 g of DMF. To the thus obtained solution, 7.5 g of MDI (polyol/isocyanate equivalent ratio: 1/1.2) was added, and the resultant was allowed to react at 70°C for 2 hours to obtain a prepolymer. Then, 0.45 g of 1,4-butanediol was added and allowed to react at 60°C for 3 hours to obtain a polyurethane resin 25% solution 5 (number average molecular weight: 60,400) containing 86% of a sebacic acid-based polyol component (solid content percentage).

Thereafter, 100 parts of the thus obtained plant-based polyurethane resin 25% solution 5, 20 parts of DMF, 6 parts of a hydrophobic silica (NIPSIL SS-50 manufactured by Tosoh Silica Corporation) and 1 part of a curing agent (CORONATE HX manufactured by Nippon Polyurethane Industry Co., Ltd.) were mixed by stirring to obtain a polyurethane resin mixture.

Then, to a nylon taffeta subjected to a water-repellent treatment in advance, the thus obtained polyurethane resin mixture was applied using a roll-on knife coater to a thickness after drying of 40 µm and coagulated in water for 2 minutes. Further, the resultant was washed by immersion in warm water at 50°C for 3 minutes and dried at 150°C for 1 minute to obtain a moisture-permeable waterproof fabric having a polyurethane resin film. The evaluation results are shown in Table 1.

### Comparative Example 2

Under a dry nitrogen atmosphere, 20 g of a plant-based sebacic acid-based polyol 1 (HS2P-103S manufactured by HOKOKU Co., Ltd.; number average molecular weight: 1,000, components: sebacic acid/propanediol, plant-based percentage: 100%) was dissolved in 1,280 g of DMF. To the thus obtained solution, 300 g of MDI (polyol/isocyanate equivalent ratio: 1/60) was added, and the resultant was allowed to react at 70°C for 2 hours to obtain a prepolymer. Then, when 106 g of 1,4-butanediol was added, gelation of the resin solution occurred, so that a resin solution suitable for coating was not obtained (sebacic acid-based polyol component: 4.7% (solid content percentage)). The evaluation results are shown in Table 1.

### Comparative Example 3

Under a dry nitrogen atmosphere, 50 g of an adipic acid-based polyol (P-2010 manufactured by KURARAY Co., Ltd.; number average molecular weight: 2,000) was dissolved in 270 g of DMF. To the thus obtained solution, 31 g of MDI (polyol/isocyanate equivalent ratio: 1/5) was added, and the resultant was allowed to react at 70°C for 2 hours to obtain a prepolymer. Then, 9.0 g of 1,4-butanediol was added and allowed to react at 60°C for 3 hours to obtain a polyurethane resin 25% solution (number average molecular weight: 130,700,) containing no sebacic acid-based polyol component (petroleum-based percentage: 100%).

Thereafter, 100 parts of the thus obtained petroleum- based polyurethane resin 25% solution, 20 parts of DMF, 6 parts of a hydrophobic silica (NIPSIL SS-50 manufactured by Tosoh Silica Corporation) and 1 part of a curing agent (CORONATE HX manufactured by Nippon Polyurethane Industry Co., Ltd.) were mixed by stirring to obtain a polyurethane resin mixture.

Then, to nylon taffeta subjected to a water-repellent treatment in advance, the thus obtained polyurethane resin mixture was applied using a roll-on knife coater to a thickness after drying of 40 µm and coagulated in water for 2 minutes. Further, the resultant was washed by immersion in warm water at 50°C for 3 minutes and dried at 150°C for 1 minute to obtain a moisture-permeable waterproof fabric having a polyurethane resin film. The evaluation results are shown in Table 1.

### Comparative Example 4

Under a dry nitrogen atmosphere, 50 g of a castor oil-based polyol (PH-5001 manufactured by Itoh Oil Chemicals Co., Ltd.; number average molecular weight: 2,500) was dissolved in 247 g of DMF. To the thus obtained solution, 25 g of MDI (polyol/isocyanate equivalent percentage: 1/5) was added, and the resultant was allowed to react at 70°C for 2 hours to obtain a prepolymer. Then, 7.2 g of 1,4-butanediol was added and allowed to react at 60°C for 3 hours to obtain a polyurethane resin 25% solution 6 (number average molecular weight: 141,000) containing 61% of a castor oil-based polyol component (solid content percentage).

Thereafter, 100 parts of the thus obtained plant-based polyurethane resin 25% solution 6, 20 parts of DMF, 6 parts of a hydrophobic silica (NIPSIL SS-50 manufactured by Tosoh Silica Corporation) and 1 part of a curing agent (CORONATE HX manufactured by Nippon Polyurethane Industry Co., Ltd.) were mixed by stirring to obtain a polyurethane resin mixture.

Then, to a nylon taffeta subjected to a water-repellent treatment in advance, the thus obtained polyurethane resin mixture was applied using a roll-on knife coater to a thickness after drying of 40 µm and coagulated in water for 2 minutes. Further, the resultant was washed by immersion in warm water at 50°C for 3 minutes and dried at 150°C for 1 minute to obtain a moisture-permeable waterproof fabric having a polyurethane resin film. The evaluation results are shown in Table 1.

**[Table 1]**

| | | Example 1 | Example 2 | Example 3 | Example 4 | Comparative Example 1 | Comparative Example 2 | Comparative Example 3 | Comparative Example 4 |
|---|---|---|---|---|---|---|---|---|---|
| Polyurethane resin | Polyol/isocyanate equivalent ratio | 1 / 5 | 1 / 5 | 1 / 3 | 1 / 5 | 1 / 1.2 | 1 / 60 | 1 / 5 | 1 / 5 |
| | Content of plant-based sebacic acid-based polyol (%) | 38 | 56 | 68 | 12 | 86 | 4.7 | 0.0 | 0.0 |
| | 100% stress of coating film (MPa) | 14.5 | 6.45 | 7.20 | 8.51 | - | - | 5.86 | 4.38 |
| | Breaking strength of coating film (MPa) | 28.5 | 20.5 | 30.0 | 27.8 | - | - | 27.3 | 22.9 |
| | Elongation at break of coating film (%) | 250 | 364 | 310 | 264 | - | - | 280 | 304.6 |
| Resin film of moisture -permeably waterproof fabric | Content of plant-based sebacic acid-based polyol (%) | 30 | 44 | 53 | 9.7 | 67 | - | 0.0 | 0.0 |
| | A-1 moisture permeability (g/m²·24h) | 10,200 | 7,500 | 10,500 | 8,100 | 2,900 | - | 7,700 | 4,300 |
| | B-1 moisture permeability (g/m²·24h) | 10,400 | 7,100 | 12,800 | 6,600 | 2,400 | - | 6,500 | 3,700 |
| | Water resistance pressure (mmH₂O) | 11,000 | 7,500 | 11,700 | 7,700 | 3,800 | - | 7,000 | 4,500 |
| | Cross-sectional structure of resin film | porous | porous | porous | porous | non-porous | - | porous | porous |

The polyurethane resins used in Examples 1 and 2, which were produced by using a 100 % plant-based sebacic acid-based polyol as a starting material, exhibited equivalent or superior toughness (stress value, breaking strength and elongation at break when stretched at 100%) as compared to the polyurethane resin of Comparative Example 3 produced by using a petroleum-based material and the moisture permeability and waterproof property of the resulting fabrics were also comparable and good. In Examples 3 and 4 as well, a plant-based percentage was attained at a certain level or greater and the fabrics exhibited good moisture permeability, waterproof property and toughness; therefore, a moisture-permeable waterproof fabric in accordance with the present invention was obtained.

On the other hand, in Comparative Example 1, since the polyol/isocyanate equivalent ratio of the polyurethane resin was large at 1/1.2, a porous film as required in the moisture-permeable waterproof fabric of the present invention was not obtained and the resulting fabric had low moisture permeability and a low water-resistance property. It is noted here that the obtained polyurethane resin coating film was in the form of an adhesive so that the tensile strength thereof could not be measured.

Further, the polyurethane resin of Comparative Example 2 had a small polyol/isocyanate equivalent ratio of 1/60; therefore, it was difficult to control the reaction and a resin solution suitable for coating could not be obtained.

In Comparative Example 4, since a polyol produced from recinoleic acid which is generally commercially available as a castor oil-based polyol was used, the toughness was comparable; however, the moisture permeability and waterproof performance required in the moisture-permeable waterproof fabric of the present invention could not be attained despite that the polyurethane resin film was porous.

## Claims

1. A moisture-permeable waterproof fabric, **characterized by** comprising, on at least one surface thereof, a porous resin film having a thickness of 5 to 100 µm, which porous resin film is composed of a dried polyurethane resin comprising at least a polyol component, an isocyanate component and a chain extender component, which polyurethane resin contains 5 to 80% by weight of a sebacic acid-based polyol component that has a number average molecular weight of 500 to 5,000 produced from a plant-based sebacic acid and a diol, wherein the polyurethane resin has a number average molecular weight of 50,000 to 500,000, and the molar ratio of said polyol component and said isocyanate component, polyol/isocyanate, is between 1/6 and 1/2, and wherein the moisture permeability measured by JIS L1099 A-1 method and the moisture permeability measured by JIS L1099 B-1 method are both not less than 5,000 g/m²·24h and the water pressure resistance measured by JIS L-1092 B method (high water pressure method) is not lower than 5,000 mmH₂O.

## Patentansprüche

1. Feuchtigkeitsdurchlässiges, wasserabweisendes Textilmaterial, **dadurch gekennzeichnet, dass** es auf mindestens einer Oberfläche davon einen porösen Harzfilm mit einer Dicke von 5 bis 100 µm umfasst, wobei der poröse Harzfilm aus einem getrockneten Polyurethanharz besteht, umfassend mindestens eine Polyolkomponente, eine Isocyanatkomponente und eine Kettenverlängerungskomponente, wobei das Polyurethanharz 5 bis 80 Gew.-% einer Sebacinsäure basierenden Polyolkomponente mit einem zahlenmittleren Molekulargewicht von 500 bis 5.000 enthält, hergestellt aus einer pflanzenbasierten Sebacinsäure und einem Diol, wobei das Polyurethanharz ein zahlenmittleres Molekulargewicht von 50.000 bis 500.000 aufweist, und das Molverhältnis von der Polyolkomponente und der Isocyanatkomponente, Polyol/Isocyanat, zwischen 1/6 und 1/2 liegt, und wobei die Feuchtigkeitsdurchlässigkeit gemessen mittels JIS L1099 A-1 Verfahren und die Feuchtigkeitsdurchlässigkeit gemessen mittels JIS L1099 B-1 Verfahren jeweils nicht weniger als 5.000 g/m²·24h betragen und die Wasserdruckfestigkeit gemessen mittels JIS L-1092 B Verfahren (Wasser-Hochdruck- Verfahren) nicht niedriger als 5.000 mmH₂O ist.

## Revendications

1. Tissu étanche à l'eau perméable à l'humidité, **caractérisé par le fait qu'**il comprend, sur au moins une surface de celui-ci, un film poreux en résine ayant une épaisseur de 5 à 100 µm, lequel film poreux en résine est composé d'une résine séchée de polyuréthane comprenant au moins un composant polyol, un composant isocyanate et un composant d'extension de chaîne, laquelle résine de polyuréthane contient de 5 à 80 % en poids d'un composant polyol à base d'acide sébacique qui a un poids moléculaire moyen en nombre de 500 à 5 000 produit à partir d'un acide sébacique d'origine végétale et d'un diol, dans lequel la résine de polyuréthane a un poids moléculaire moyen en nombre de 50 000 à 500 000, et le rapport molaire dudit composant polyol audit composant isocyanate, polyol/isocyanate, se situe entre 1/6 et 1/2, et dans lequel la perméabilité à l'humidité mesurée selon la méthode JIS L1099 A-1 et la perméabilité à l'humidité mesurée selon la méthode JIS L1099 B-1 sont toutes deux non inférieures à 5 000 g/m²·24 h et la résistance à la pression d'eau mesurée selon la méthode JIS L-1092 B (méthode avec une pression élevée de l'eau) n'est pas inférieure à 5 000 mmH₂O.
